(19) **Europäisches Patentamt / European Patent Office / Office européen des brevets**

(11) **EP 4 629 629 A1**

(12) **EUROPEAN PATENT APPLICATION**

(43) Date of publication:
08.10.2025 Bulletin 2025/41

(21) Application number: 24168529.6

(22) Date of filing: 04.04.2024

(51) International Patent Classification (IPC):
*H04N 19/124* (2014.01)   *H04N 19/154* (2014.01)
*H04N 19/184* (2014.01)   *H04N 19/36* (2014.01)
*H04N 19/463* (2014.01)

(52) Cooperative Patent Classification (CPC):
H04N 19/36; H04N 19/124; H04N 19/154;
H04N 19/184; H04N 19/463

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Koninklijke Philips N.V.
5656 AG Eindhoven (NL)

(72) Inventors:
• VAREKAMP, Christiaan
5656 AG Eindhoven (NL)
• YUAN, Zhaorui
5656 AG Eindhoven (NL)

(74) Representative: Philips Intellectual Property &
Standards
High Tech Campus 52
5656 AG Eindhoven (NL)

(54) **TRANSMISSION OF HIGH BIT-DEPTH SIGNALS**

(57)     A bitstream, an encoder and method for encoding the bitstream, and a decoder and method for decoding the bitstream. The bitstream comprises a plurality of encoded signals. Metadata, including a value for each of one or more mapping parameters of a plurality of mapping functions used to generate the plurality of encoded signals from an input signal having a higher bit depth than the encoded signals, is encoded in the bitstream or made available via external means. The value for each of the one or more mapping parameters may be determined based on a predefined set of compression parameters.

1200

FIG. 12

EP 4 629 629 A1

**Description**

FIELD OF THE INVENTION

The invention relates to the field of encoding, transmitting and decoding signals, particularly signals having a higher bit depth than is supported by an encoder encoding the signal.

BACKGROUND OF THE INVENTION

Video data is typically compressed prior to transmission, in order to reduce the resources required to transmit the video data (thus reducing the cost of transmission). This can cause problems when transmitting data with a higher bit depth than is supported by video compressors.

For instance, in immersive video applications, depth maps often have a higher bit depth (e.g. 16-bit) than is supported by video encoders (which typically support a 8-bit or 10-bit format). Since video encoders typically use lossy compression profiles to achieve acceptable bit rates, it is not straightforward to transmit depth information in a way that allows a decoder receiving the compressed depth information to recover the depth information at the original bit-depth.

Therefore, in existing techniques for encoding immersive video, depth information with a higher bit depth is quantized to the bit depth of the encoder before being compressed. This reduces a precision of the transmitted depth information.

There is therefore a need for improved techniques for encoding and/or transmitting high bit-depth data.

SUMMARY OF THE INVENTION

The invention is defined by the claims.

According to examples in accordance with an aspect of the invention, there is provided a bitstream comprising: a plurality of encoded signals; and encoded metadata, wherein the encoded metadata includes a value for each of one or more mapping parameters of a plurality of mapping functions used to generate the plurality of encoded signals from an input signal having a higher bit depth than the encoded signals.

The inventors have recognized that a high bit-depth signal may be transmitted at a lower bit depth by the use of mapping functions to map the high bit-depth signal to a plurality of lower bit-depth signals. A bitstream comprising the encoded lower bit-depth signals and the parameter(s) of the mapping functions allows the high bit-depth signal to be reconstructed accurately even after lossy compression.

The plurality of encoded signals may, for example, comprise a plurality of signals generated from a depth map. Depth sensors are typically able to acquire depth data to a higher precision than is supported by a video encoder. The bitstream may further comprise additional data, such as texture data.

In other examples, the plurality of encoded signals may comprise signals generated from an ultrasound signal. Ultrasound signals also often have a higher bit depth than is generally supported by encoders.

In some examples, the encoded metadata further includes an indication of the plurality of mapping functions used to generate the encoded signals.

Alternatively, the identity of the mapping functions used may be provided by external means.

In some examples, the encoded metadata further includes a threshold value for identifying uncertain and/or missing data values in the encoded signals.

The threshold value used to identify uncertain and/or missing data values may have been determined based on the compression parameters used in encoding the bitstream. In some examples, the threshold value may further depend on an error correction algorithm to be used by a decoder of the bitstream.

According to examples in accordance with another aspect of the invention, there is provided a method for determining a value for one or more mapping parameters of a plurality of mapping functions for use with a predefined set of compression parameters, the method comprising: defining a plurality of mapping functions parameterized by one or more mapping parameters, wherein each mapping function is configured to map an input signal to an output signal having a predefined bit depth; defining an initial value for each of the one or more mapping parameters; receiving the predefined set of compression parameters; receiving an input signal having a higher bit depth than the predefined bit depth; iteratively repeating the steps of: processing the input signal to generate a plurality of output signals, wherein each output signal is generated by processing the input signal using a respective mapping function; compressing the plurality of output signals using the predefined set of compression parameters; processing the compressed output signals to generate a reconstructed signal having the same bit depth as the input signal; determining a measure of difference between the input signal and the reconstructed signal; and adjusting the value for each of the one or more mapping parameters based on the determined measure of difference, until one or more predetermined conditions are satisfied; and determining the value for each of the one or more mapping parameters as the value for which the one or more predetermined conditions are satisfied.

By adjusting the value(s) until the one or more predetermined conditions are satisfied, the mapping parameter(s) of the mapping functions may be tailored to the compression parameters used by a given encoder.

In some examples, the measure of difference between the input signal and the reconstructed signal is determined after applying one or more predefined error correction algorithms to the reconstructed signal.

The inventors have recognized that a most suitable value of the mapping parameter(s) may depend on the error correction process used by a decoder. By determining the measure of difference based on the reconstructed signal after error correction, the mapping parameter(s) may be additionally tailored to a particular error correction algorithm to further increase an accuracy of a reconstructed signal processed using the particular error correction algorithm.

In some examples, the plurality of mapping functions consists of: a first mapping function that divides an input by a first parameter; and a second mapping function that determines a remainder of a division of the input by the first parameter.

In many cases, two mapping functions will be sufficient to preserve the high precision of the input signal without unnecessarily increasing the bit rate.

In some examples, the plurality of mapping functions consists of: a third mapping function that divides an input by a second parameter; a fourth mapping function that divides a first remainder by a third parameter, wherein the first remainder is a remainder of a division of the input by the second parameter; and a fifth mapping function that determines a remainder of a division of the first remainder by the third parameter.

The use of three mapping functions allows even higher bit-depth signals to be transmitted in a way that allows the original signal to be reconstructed at the original bit depth.

According to examples in accordance with yet another aspect of the invention, there is provided a method for encoding an input signal using an encoder configured to encode signals having a predefined bit depth using a predefined set of compression parameters, the method comprising: receiving an input signal having a bit depth higher than the predefined bit depth; defining a plurality of mapping functions parameterized by one or more mapping parameters, wherein each mapping function is configured to map an input signal to an output signal having the predefined bit depth; setting a value for each of the one or more mapping parameters based on the predefined set of compression parameters; processing the received input signal to generate a plurality of output signals, wherein each output signal is generated by processing the received input signal using a respective mapping function; and encoding the output signals into a bitstream, wherein encoding the output signals includes compressing the output signals using the predefined set of compression parameters.

This method allows high bit-depth signals to be encoded more easily. For instance, the method may be used to enable a high bit-depth signal to be encoded using a standard video codec. The ability to encode different types of signal using the same codec provided by the proposed method has the additional advantage of enabling different media tracks to be synchronized at frame level more easily.

In some examples, the value for each of the one or more mapping parameters may additionally be encoded into the bitstream (for instance, as metadata of the bitstream).

According to examples in accordance with yet another aspect of the invention, there is provided a method for decoding a bitstream. The method comprises: receiving a bitstream comprising a plurality of encoded signals generated from an input signal having a higher bit depth using a plurality of mapping functions; decoding the plurality of signals; defining a reconstruction function parameterized by one or more reconstruction parameters; determining a value for each of the one or more reconstruction parameters; and processing the plurality of signals, using the reconstruction function, to generate a reconstructed signal having the higher bit depth.

In some examples, the bitstream may further comprise encoded metadata including a value for each of one or more mapping parameters of the plurality of mapping functions used to generate the plurality of encoded signals from an input signal having a higher bit depth than the encoded signals, and the value for each of the one or more reconstruction parameters may be determined based on the value for each of the one or more mapping parameters.

In some examples, the method for decoding the bitstream further comprises processing the reconstructed signal to determine, for each data value in the reconstructed signal, a difference between the data value and each adjacent data value; and identifying, as an invalid data value, each data value for which the difference between the data value and each adjacent data value exceeds a predetermined validity threshold.

For some purposes, the accuracy of the data values may be considered more important than the completeness of the data. Identifying invalid data values improves a likelihood that all remaining data values have a high level of accuracy.

In some examples, the method for decoding the bitstream further comprises processing any data value identified as an invalid data value using one or more error correction algorithms to generate a corrected reconstructed signal, wherein the one or more error correction algorithms comprise at least one error correction algorithm defined based on the plurality of mapping functions used to generate the plurality of encoded signals.

The use of an error correction algorithm defined based on the mapping functions improves an accuracy of the corrected reconstructed signal.

For instance, where the mapping functions include a division function and a modulo function, compression errors in the signal output by the division function will result in clear outliers in the reconstructed signal. The error correction algorithms used for such a reconstructed signal may therefore include an algorithm configured to compare each data value in the reconstructed signal with adjacent data values to identify outliers. For data values identified as outliers, the corresponding value in the signal output by the division function may then be increased or decreased by one level, as appropriate.

There is also provided a computer program product comprising computer program code means which, when executed on a computing device having a processing system, cause the processing system to perform all of the steps of any method described above.

There is also provided a processing system for determining a value for one or more mapping parameters of a plurality of mapping functions for use with a predefined set of compression parameters, the processing system being configured to: define a plurality of mapping functions parameterized by one or more mapping parameters, wherein each mapping function is configured to map an input signal to an output signal having a predefined bit depth; define an initial value for each of the one or more mapping parameters; receive the predefined set of compression parameters; receive an input signal having a higher bit depth than the predefined bit depth; iteratively repeat the steps of: processing the input signal to generate a plurality of output signals, wherein each output signal is generated by processing the signal using a respective mapping function; compressing the plurality of output signals using the predefined set of compression parameters; processing the compressed output signals to generate a reconstructed signal having the same bit depth as the input signal; determining a measure of difference between the input signal and the reconstructed signal; and adjusting the value for each of the one or more mapping parameters based on the determined measure of difference, until one or more predetermined conditions are satisfied; and determine the value for each of the one or more mapping parameters as the value for which the one or more predetermined conditions are satisfied.

There is also provided an encoder configured to encode an input signal having a predefined bit depth using a predefined set of compression parameters, the encoder being further configured to: receive an input signal having a bit depth higher than the predefined bit depth; define a plurality of mapping functions parameterized by one or more mapping parameters, wherein each mapping function is configured to map an input signal to an output signal having the predefined bit depth; set a value for each of the one or more mapping parameters based on the predefined compression parameters; process the received input signal to generate a plurality of output signals, wherein each output signal is generated by processing the received input signal using a respective mapping function; and encode the output signals into a bitstream, wherein encoding the output signals includes compressing the output signals using the predefined compression parameters.

In some examples, the encoder may be further configured to encode the value for each of the one or more mapping parameters into the bitstream.

There is also provided a decoder configured to decode data, the decoder being configured to: receive a bitstream comprising: a plurality of encoded signals generated from an input signal having a higher bit depth using a plurality of mapping functions; decode the plurality of signals; define a reconstruction function parameterized by one or more reconstruction parameters; determine a value for each of the one or more reconstruction parameters; and process the plurality of signals, using the reconstruction function, to generate a reconstructed signal having the higher bit depth.

In some examples, the received bitstream may further comprise encoded metadata including a value for each of one or more mapping parameters of the plurality of mapping functions used to generate the plurality of encoded signals from an input signal having a higher bit depth than the encoded signals, and the decoder may be configured to determine the value for each of the one or more reconstruction parameters based on the value for each of the one or more mapping parameters.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 illustrates a method for determining a value for one or more mapping parameters of a plurality of mapping functions for use with a predefined set of compression parameters, according to an embodiment of the invention;
Fig. 2 illustrates sub-steps of step 150 of the method of Fig. 1;
Fig. 3 illustrates an example input signal;
Fig. 4 illustrates a first output signal, generated by processing the example input signal of Fig. 3 using a first mapping function;
Fig. 5 illustrates a second output signal, generated by processing the example input signal of Fig. 3 using a second mapping function;

Fig. 6 illustrates a first decompressed output signal, produced by compressing the first output signal of Fig. 4 using a predefined set of compression parameters and then decompressing the compressed signal;

Fig. 7 illustrates a second decompressed output signal, produced by compressing the second output signal of Fig. 5 using the predefined set of compression parameters and then decompressing the compressed signal;

Fig. 8 illustrates a first reconstructed signal, produced by processing the first decompressed output signal of Fig. 6 and the second decompressed output signal of Fig. 7 using a reconstruction function;

Fig. 9 illustrates a measure of difference between the example input signal of Fig. 3 and the first reconstructed signal of Fig. 8;

Fig. 10 illustrates a second reconstructed signal for the example input signal of Fig. 3;

Fig. 11 illustrates a measure of difference between the example input signal of Fig. 3 and the second reconstructed signal of Fig. 10;

Fig. 12 illustrates a system for transmitting high bit-depth signals, according to an embodiment of the invention;

Fig. 13 illustrates a method for encoding an input signal, using an encoder configured to encode signals having a predefined bit depth using a predefined set of compression parameters, according to an embodiment of the invention; and

Fig. 14 illustrates a method for decoding a bitstream, according to an embodiment of the invention.

## DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a bitstream, an encoder and method for encoding the bitstream, and a decoder and method for decoding the bitstream. The bitstream comprises a plurality of encoded signals. Metadata, including a value for each of one or more mapping parameters of a plurality of mapping functions used to generate the plurality of encoded signals from an input signal having a higher bit depth than the encoded signals, is encoded in the bitstream or made available via external means. The value for each of the one or more mapping parameters may be determined based on a predefined set of compression parameters.

Illustrative embodiments may, for example, be employed in video encoding and/or decoding systems, particularly immersive video systems.

The inventors have recognized that a plurality of mapping functions may be used to produce a plurality of lower bit-depth signals that together contain the information provided in a higher bit-depth signal. In situations where a signal has a higher bit depth than is supported by an encoder encoding the signal, the mapping functions may be used to map the higher bit-depth signal to a plurality of signals having a bit depth that is supported by the encoder. This enables a high bit-depth signal to be encoded (as a plurality of signals) in a way that allows the information in the high bit-depth signal to be recovered at a higher precision than the maximum bit-depth supported by the encoder (in some cases, at the same precision as the high bit-depth signal), even if the encoder uses lossy compression.

The inventors have further recognized that a most suitable value for each parameter of the mapping functions depends on the compression parameters used by the encoder.

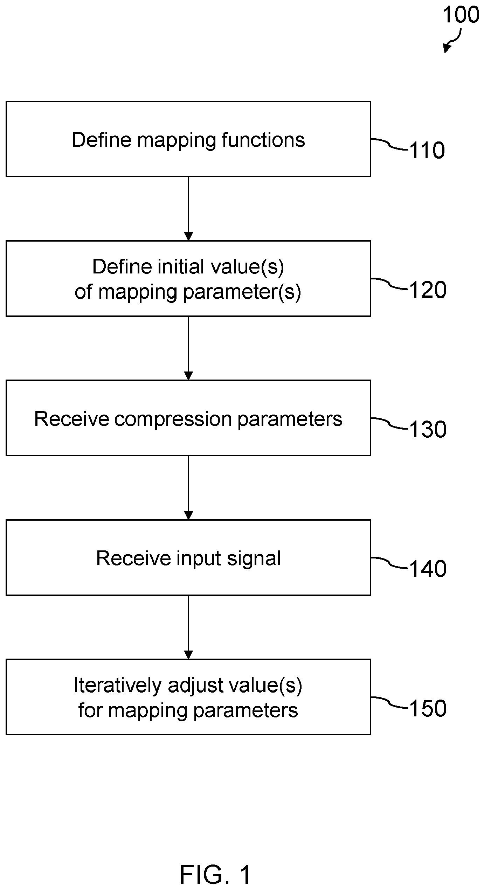

Fig. 1 illustrates a method 100 for determining a value for one or more mapping parameters of a plurality of mapping functions for use with a predefined set of compression parameters, according to an embodiment of the invention.

The method 100 may, for example, be performed in order to determine a value for each mapping parameter of the mapping functions for a particular encoder configured to use the predefined set of compression parameters. Alternatively, the method 100 may be carried out multiple times, for different predefined sets of compression parameters, in order to generate a look-up table providing a value for each mapping parameter for each of a plurality of sets of compression parameters.

The method 100 begins at step 110, at which a plurality of mapping functions are defined. Each mapping function is configured to map an input signal to an output signal having a predefined bit depth.

The plurality of mapping functions are parameterized by one or more mapping parameters. In some examples, the same mapping parameter(s) may parameterize more than one (and, in some cases, all) of the mapping functions.

The predefined bit depth may, for example, be a bit depth typically supported by encoders for a particular application (e.g. in the case of video signals, the predefined bit depth may be 8 bit, as video encoders typically support at least an 8-bit format). In some examples, the predefined bit depth may be maximum bit depth supported by a particular encoder (e.g. an encoder using the predefined set of compression parameters). The predefined bit depth may, for example, be defined by user input.

The number of mapping functions may depend on a bit depth of the input signal and the predefined bit depth. For instance, if the predefined bit depth is 8 bit, two mapping functions are required to map a signal having a bit depth of 9-16 bit to 8-bit signals without loss of precision, while three mapping functions are required to map a signal having a bit depth of 17-24 bit to 8-bit signals without loss of precision.

In some examples, the plurality of mapping functions may consist of two mapping functions. For instance, a first mapping function may divide an input by a first parameter, and a second mapping function may determine a remainder of a division of the input by the first parameter.

Equations 1 and 2 respectively provide examples of suitable first and second mapping functions, $f(z; \Delta)$ and $g(z; \Delta)$. $f(z; \Delta)$ maps input signal z to output signal $m_1$, while $g(z; \Delta)$ maps input signal z to output signal $m_2$. Mapping functions $f(z; \Delta)$ and $g(z; \Delta)$ are each parameterized by a single mapping parameter, $\Delta$.

$$m_1 = f(z; \Delta) = \Delta \cdot \text{floor}\left(\frac{z}{\Delta}\right) \tag{1}$$

$$m_2 = g(z; \Delta) = \frac{z \bmod \Delta}{\Delta} \tag{2}$$

In some examples, the plurality of mapping functions may consist of three mapping functions. For instance, a third mapping function may divide an input by a second parameter, a fourth mapping function may divide a first remainder (i.e. a remainder of a division of the input by the second parameter) by a third parameter and a fifth mapping function may determine a remainder of a division of the first remainder by the third parameter.

Equations 3 to 6 define an example set of three mapping functions, mapping input signal z to output signals $m_3$, $m_4$ and $m_5$ respectively. Two mapping parameters, $\Delta_1$ and $\Delta_2$, are used.

$$m_3 = \Delta_1 \cdot \text{floor}\left(\frac{z}{\Delta_1}\right) \tag{3}$$

$$z_2 = \frac{z \bmod \Delta_1}{\Delta_1} \tag{4}$$

$$m_4 = \Delta_2 \cdot \text{floor}\left(\frac{z_2}{\Delta_2}\right) \tag{5}$$

$$m_5 = \frac{z_2 \bmod \Delta_2}{\Delta_2} \tag{6}$$

In some examples, the number of mapping functions may exceed three. For instance, a greater number of mapping functions may be defined by extending how the remainder of a division is processed.

Alternative mapping functions that do not include a division function and one or more functions processing the remainder of the division are also envisaged.

For instance, the plurality of mapping functions may generate a plurality of output signals that together define a local plane fit to the signal (e.g. a local depth plane in the case of a depth signal). This may be particularly advantageous for an input signal containing depth data for a scene having a steep slope in depth.

For example, scenes often contain flat (i.e. zero curvature) 3D surfaces, such as tables, books, walls, TVs, floors, windows, doors, and so on. Therefore, a large group of pixels in a depth map may be defined by a function expressing the depth z as a linear (plane) equation dependent on image coordinates x and y:

$$z = k_1 x + k_2 y + k_3 \tag{7}$$

Output signals may be produced for the coefficients $k_1$, $k_2$ and $k_3$. The coefficients $k_1$, $k_2$ and $k_3$ may be assumed to be constant over pixels corresponding to the flat objects, which is advantageous for compression of the output signals.

At step 120, an initial value is defined for each of the one or more mapping parameters. The initial value may, for instance be a random value or a default value.

At step 130, a predefined set of compression parameters is received. The predefined set of compression parameters are a set of parameters that define how to compress a signal, for instance, parameters relating to compression quality and/or latency. In some examples, the predefined set of compression parameters may include a codec type. The parameters included in the predefined set of compression parameters may depend on a type of signal. The predefined set of compression parameters may, for example, be received from an encoder or via user input.

At step 140, an input signal having a higher bit depth than the predefined bit depth is received. The input signal may, for example, be an image or video signal. For instance, the input signal may be a depth signal (i.e. a signal containing depth values for an object or scene). In another example, the input signal may be an ultrasound signal.

At step 150, the value for each of the one or more mapping parameters is iteratively adjusted to determine a suitable value for each of the one or more mapping parameters.

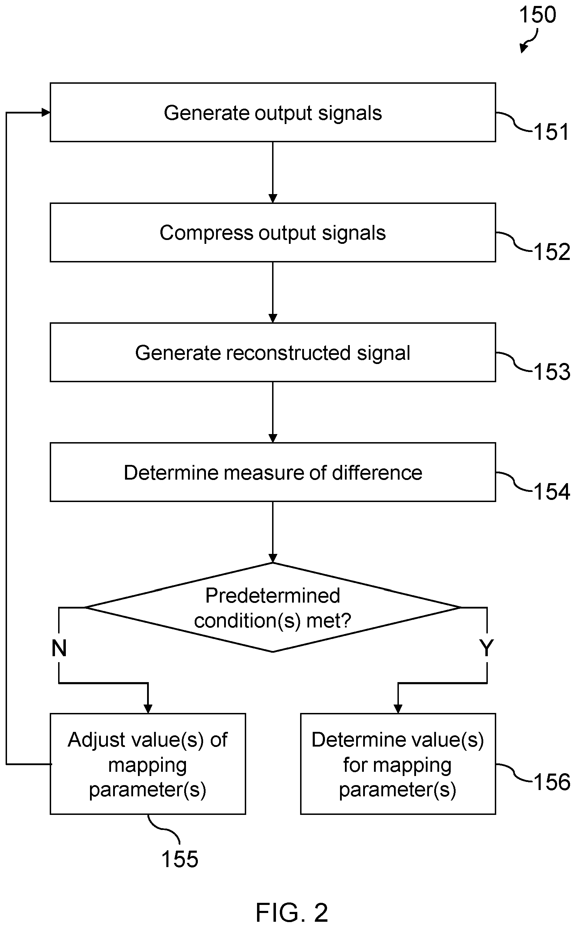

Step 150 comprises a number of sub-steps, illustrated in Fig. 2. At sub-step 151, the input signal is processed to generate a plurality of output signals. Each output signal is generated by processing the input signal using a respective mapping function. In other words, the input signal is processed by each of the plurality of mapping functions, producing an output signal for each mapping function.

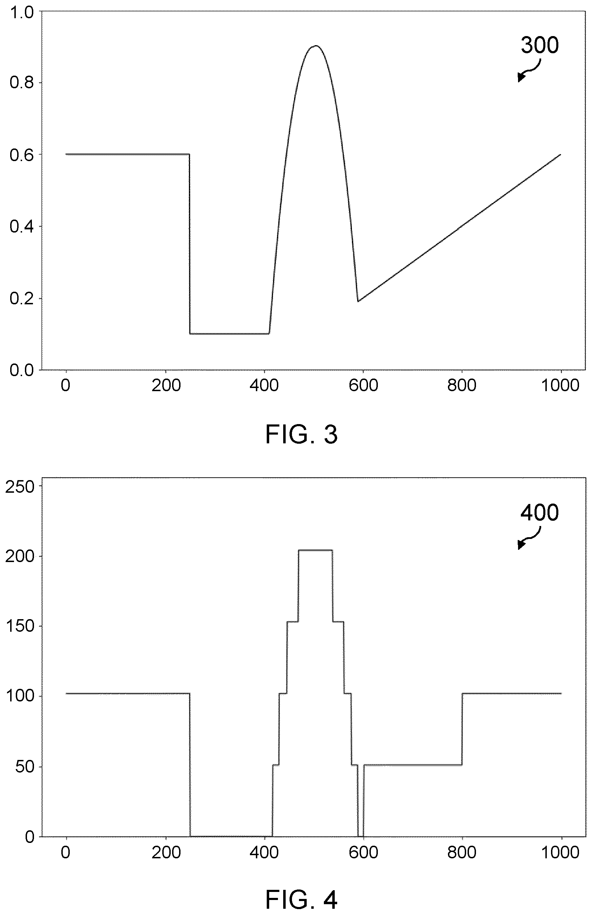

Fig. 3 illustrates an example input signal 300. Example input signal 300 is a (normalized) one-dimensional depth signal.

Fig. 4 illustrates a first output signal 400, generated by processing the example input signal 300 using the first mapping function $f(z; \Delta)$ defined above (Equation 1).

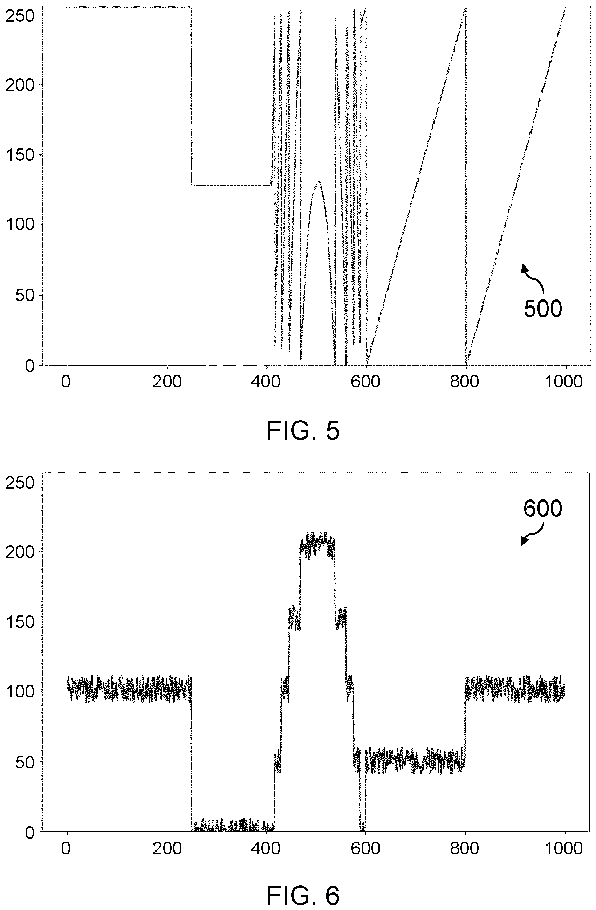

Fig. 5 illustrates a second output signal 500, generated by processing the example input signal 300 using the second mapping function $g(z; \Delta)$ defined above (Equation 2).

Returning to Fig. 2, at sub-step 152, the plurality of output signals are compressed using the predefined set of compression parameters. Any suitable technique may be used to compress the plurality of output signals.

In some examples, the plurality of output signals may be preprocessed before the plurality of output signals are compressed using the predefined set of compression parameters. For instance, a quantization preprocessing step may be performed; i.e. each of the plurality of output signals may be scaled and rounded with respect to a predetermined range (e.g. an 8-bit range with integers from 0 to 255) (for example, so that the plurality of output signals can be input to a standardized video codec). The first and second output signals 400, 500 illustrated in Figs. 4 and 5 have been quantized to 8-bit.

At sub-step 153, the compressed output signals are processed to generate a reconstructed signal having the same bit depth as the input signal. The reconstructed signal may be generated by decompressing the compressed output signals, and processing the decompressed output signals using a reconstruction function to generate an approximation of the input signal. The decompressed output signals may be preprocessed (e.g. to de-quantize the decompressed output signals) before processing the decompressed output signals using the reconstruction function.

The reconstruction function may be defined based on the plurality of mapping functions used to generate the plurality of output signals. The reconstruction function may be parameterized by one or more reconstruction parameters (depending on the mapping functions). The value for each of the one or more reconstruction parameters may be determined based on the value for each of the one or more mapping parameters. For instance, if the reconstruction function is defined such that the one or more reconstruction parameters are the same as the one or more mapping parameters, the value for each reconstruction parameter may be determined to be equal to the value of the corresponding mapping parameter.

For instance, in the case of the first and second mapping functions , $f(z; \Delta)$ and $g(z; \Delta)$ defined above (Equations 1 and 2), a suitable reconstruction function would be $h_1(m_1, m_2; \Delta)$, which generates a reconstructed signal $\tilde{z}$, having a same bit depth as the input signal z, based on the output signals $m_1$ and $m_2$ generated by the first and second mapping functions $f(z; \Delta)$ and $g(z; \Delta)$. Reconstruction function $h_1(m_1, m_2; \Delta)$ is parameterized by the same parameter $\Delta$ as the mapping functions $f(z; \Delta)$ and $g(z; \Delta)$; the value used for $\Delta$ to generate the reconstructed signal $\tilde{z}$ may therefore be the same value used to generate the output signals $m_1$ and $m_2$.

$$\tilde{z} = h_1(m_1, m_2; \Delta) = \Delta \left( \text{round} \left( \frac{m_1}{\Delta} \right) + m_2 \right) \qquad (8)$$

Similarly, where the three mapping functions defined by Equations 3 to 6 above are used to generate output signals $m_3$, $m_4$ and $m_5$, a suitable reconstruction function for generating a reconstructed signal $\tilde{z}$ for input signal z is provided by $h_2(m_3, m_4, m_5; \Delta_1, \Delta_2)$. The values used for $\Delta_1$ and $\Delta_2$ to generate the reconstructed signal $\tilde{z}$ may therefore be the same values used to generate the output signals $m_3$, $m_4$ and $m_5$.

$$\tilde{z} = h_2(m_3, m_4, m_5; \Delta_1, \Delta_2) = \Delta_1 \left( \mathrm{round} \left( \frac{m_3}{\Delta_1} \right) + \Delta_2 \left( \mathrm{round} \left( \frac{m_4}{\Delta_2} \right) + m_5 \right) \right) \qquad (9)$$

Fig. 6 illustrates a first decompressed output signal 600, produced by compressing the first output signal 400 using a predefined set of compression parameters and then decompressing the compressed signal. The compression of the first output signal 400 involved lossy compression; the first decompressed output signal 600 therefore includes errors and is not identical to the first output signal 400 of Fig. 4.

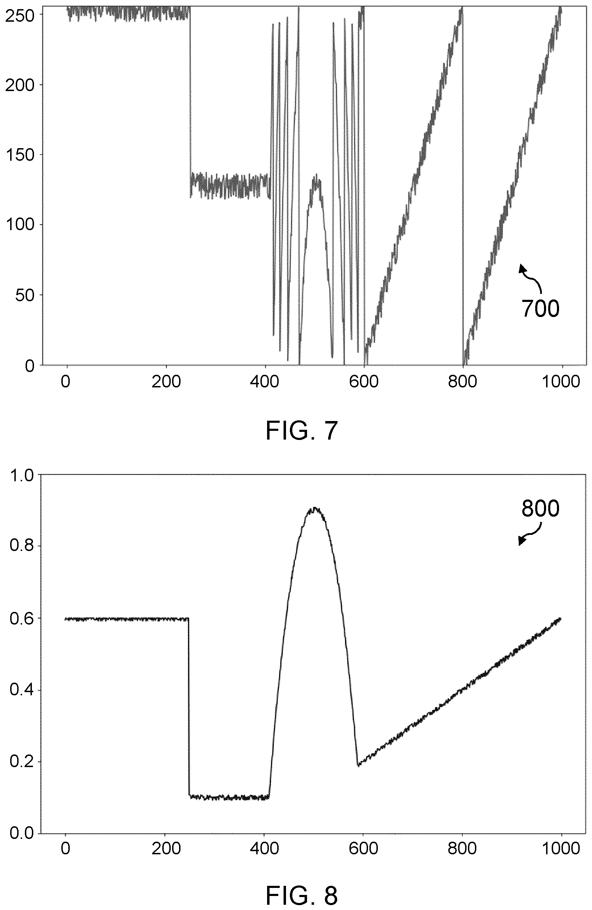

Fig. 7 illustrates a second decompressed output signal 700, produced by compressing the second output signal 500 using the predefined set of compression parameters and then decompressing the compressed signal. Similarly to the first decompressed output signal 600, the second decompressed output signal 700 includes errors introduced by lossy compression, and is therefore not identical to the second output signal 500 of Fig. 5.

Fig. 8 illustrates a first reconstructed signal 800, produced by processing the first decompressed output signal 600 and the second decompressed output signal 700 using the reconstruction function $h_1(m_1, m_2; \Delta)$ defined above (Equation 8). The first reconstructed signal 800 has the approximate shape of the input signal 300 of Fig. 3, however, there is a "fuzziness" (compression noise) that was not present in the input signal 300, caused by the lossy compression of the decompressed output signals used to generate the first reconstructed signal.

Returning to Fig. 2, at sub-step 154, a measure of difference between the input signal and the reconstructed signal is determined. For instance, the measure of difference may comprise the values, mean squared values or absolute values of the subtraction of the input signal from the reconstructed signal (i.e. $|\tilde{z} - z|$).

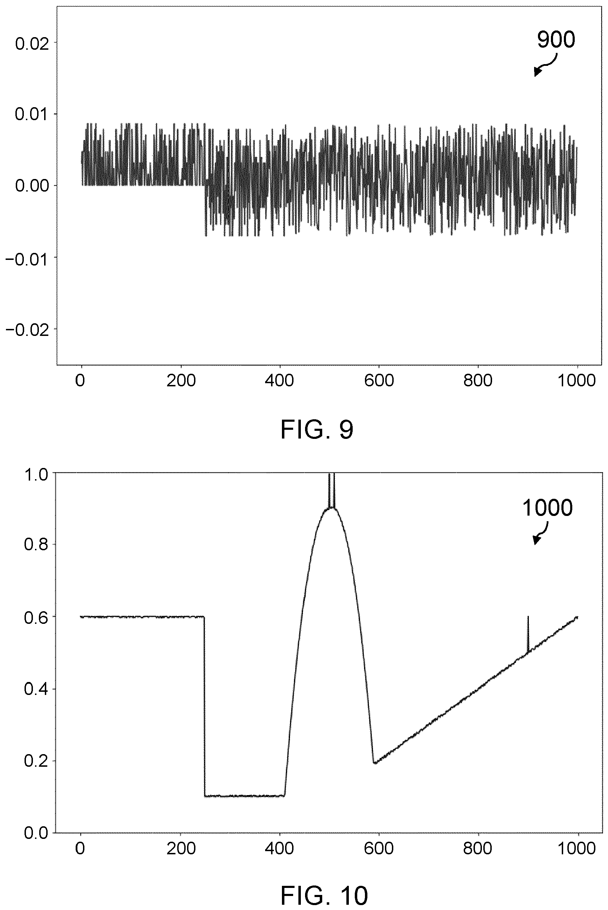

Fig. 9 illustrates a measure of difference 900 between the example input signal 300 of Fig. 3 and the first reconstructed signal 800 of Fig. 8. In Fig. 9, the measure of difference is determined by subtracting the input signal 300 from the first reconstructed signal 800.

Returning to Fig. 2, in response to a determination that one or more predetermined conditions are not satisfied, the method proceeds to sub-step 155, at which the value for each of the one or more mapping parameters is adjusted based on the determined measure of difference. The method then returns to sub-step 151, in which a new plurality of output signals is generated using the adjusted value(s) for the mapping parameter(s) of the mapping functions.

In other words, the sub-steps of generating a plurality of output signals, compressing the output signals, generating a reconstructed signal, determining a measure of difference and adjusting the value for each of the one or more mapping parameters are iteratively repeated until the one or more predetermined conditions are satisfied.

In response to a determination that one or more predetermined conditions are satisfied, the method proceeds to sub-step 156, at which the value for each of the one or more mapping parameters is determined as the value for which the one or more predetermined conditions are satisfied.

The predetermined conditions may, for example, relate to the measure of difference between the input signal and the reconstructed signal. For instance, the predetermined conditions may comprise a condition that the mean squared value, mean absolute value and/or maximum absolute value of the difference between the input signal and the reconstructed signal is minimized, or that the mean squared value, mean absolute value and/or maximum absolute value of the difference is below a predetermined mean error threshold.

The advantage of iteratively adjusting the value(s) of the mapping parameter(s) is shown by Fig. 10, which illustrates a second reconstructed signal 1000 for the example input signal 300. The second reconstructed signal 1000 has been generated in the same way (and using the same predefined set of compression parameters) as the first constructed signal 800 of Fig. 8, but using a different value (0.1 instead of 0.2) for the mapping parameter $\Delta$. A comparison of Figs. 3, 8 and 10 shows that the second reconstructed signal 1000 is overall a more accurate reconstruction of the input signal 300 than the first reconstructed signal 800, but has a small number of larger outliers.

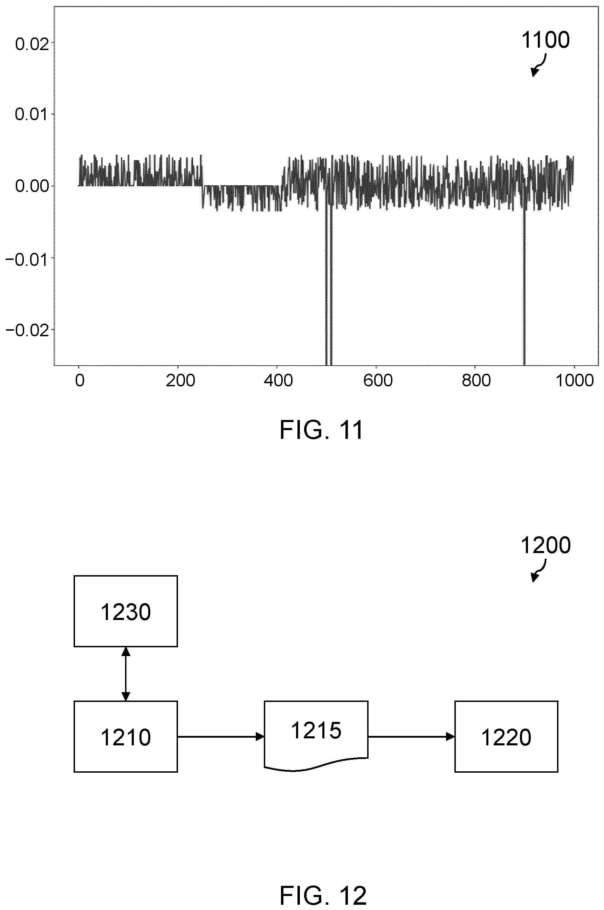

This is confirmed by Fig. 11, which illustrates a measure of difference 1100 between the example input signal 300 of Fig. 3 and the second reconstructed signal 1000 of Fig. 10, determined by subtracting the input signal 300 from the second reconstructed signal 1000. A comparison of Figs. 9 and 11 shows that the mean error is smaller for the second reconstructed signal 1000 than the first reconstructed signal 900.

The few outliers in the second reconstructed signal 1000 are large enough that they may be easily detected, and therefore easily corrected, as described in more detail below. The value $\Delta = 0.1$ used to generate the second reconstructed signal 1000 may therefore be considered to be more suitable as the value for the mapping parameter $\Delta$ than the value $\Delta = 0.2$ used to generate the first reconstructed signal 800 for the predefined set of compression parameters used to generate the first and second reconstructed signals.

In another example, it has been found that, for a 16-bit input depth map measured with an Azure Kinect depth sensor (measuring range: 500-2000 mm) and processed with the mapping functions $f(z; \Delta)$ and $g(z; \Delta)$ defined above (Equations 1 and 2) to generate 8-bit output signals $m_1$ and $m_2$, a suitable value for $\Delta$ is 0.03 when $m_1$ and $m_2$ are placed in all color channels of an RGB map, color converted to YUV and compressed with HEVC (GStreamer codec implementation: nvh265encoder/nvh265decoder, preset 2 (high quality)).

The value(s) for the mapping parameter(s) may be determined using a normalized input signal in the iterative process described above. If the input signal used in the iterative process for determining the value(s) for the mapping parameter(s) is not normalized, the value(s) for the mapping parameter(s) may be defined relative to the range of values in the input signal, in order to allow the value(s) to be scaled for input signals having different ranges of values.

In some examples, an additional sub-step of applying one or more predefined error correction algorithms to the reconstructed signal may be performed before determining the measure of difference. In other words, the measure of difference may be a measure of difference between the input signal and the corrected reconstructed signal. In this way, the determination of the value(s) of the mapping parameter(s) may take into account error correction that will be applied to reconstructed signals using the determined value(s) of the mapping parameter(s).

In some examples, the predefined error correction algorithm may be defined based on the plurality of mapping functions used to generate the output signals. For instance, where the plurality of mapping functions include a division function and one or more functions that process the remainder of the division (such as the plurality of mapping functions $f(z; \Delta)$ and $g(z; \Delta)$ defined in Equations 1 and 2, and the plurality of mapping functions defined by Equations 3 to 6), errors in the compression of the signal output by the division function will result in outliers in the reconstructed signal. Such errors may be corrected by adjusting a part of the reconstructed signal corresponding to the signal output by the division function.

This concept may be demonstrated by considering the mapping functions $f(z; \Delta)$ and $g(z; \Delta)$ defined in Equations 1 and 2, and the corresponding reconstruction function $h_1(m_1, m_2; \Delta)$ defined in Equation 8.

The term "$\mathrm{round}\left(\frac{m_1}{\Delta}\right)$" in the reconstruction function $h_1(m_1, m_2; \Delta)$ has a limited set of possible values: $\left\{0, \cdots, \mathrm{round}\left(\frac{Z}{\Delta}\right)\right\}$. Compression errors may result in

$$\mathrm{round}\left(\frac{\tilde{m}_1}{\Delta}\right) \neq \mathrm{round}\left(\frac{m_1}{\Delta}\right)$$

for some values of the output signal $m_1$, where $\tilde{m}_1$ is the output signal $m_1$ after compression using the predefined set of compression parameters and decompression. These instances will result in outlier values in the reconstructed signal, which may be detected by identifying values in the signal that differ from neighboring values by more than a predetermined amount (assuming that the overall error in the reconstructed signal is sufficiently low for these outliers to be distinguished).

The outlier values may be corrected by replacing the value of $\mathrm{round}\left(\frac{\tilde{m}_1}{\Delta}\right)$ in the reconstruction function with a level surrounding $\mathrm{round}\left(\frac{\tilde{m}_1}{\Delta}\right)$, such as $\mathrm{round}\left(\frac{\tilde{m}_1}{\Delta}\right) - 1$ or $\mathrm{round}\left(\frac{\tilde{m}_1}{\Delta}\right) + 1$. The level that minimizes the difference between the outlier and neighboring values may be selected to replace the value of $\mathrm{round}\left(\frac{\tilde{m}_1}{\Delta}\right)$ in the reconstruction function.

The one or more predefined error correction algorithms may additionally or alternatively comprise any other suitable error correction algorithms, including spatial filters such as mean or median filters, and neural networks trained to detect and correct errors (for instance, a neural network trained for the predefined set of compression parameters and for the type of signal, e.g. depth signals). In the case of depth signals for which corresponding color imaging data is available (e.g. depth signals for immersive video), an error correction algorithm may be used to correct depth values by using the heuristic that neighboring pixels with similar color values are likely to have similar depth values (e.g. any depth value for a group of pixels having similar color values that differs from the mean depth value for the group of pixels may be replaced by the mean depth value).

Fig. 12 illustrates a system 1200 for transmitting high bit-depth signals, according to an embodiment of the invention. The system comprises an encoder 1210 and a decoder 1220. The encoder is configured to output a bitstream 1215, which is received by the decoder. In Fig. 12, the bitstream 1215 is transmitted directly from the encoder to the decoder; however, as the skilled person will readily appreciate, the bitstream may alternatively be stored on a suitable storage medium before being transmitted to the decoder.

In some examples, the system 1200 may further comprise a processing system 1230 for determining a value of one or more mapping parameters of a plurality of mapping functions for use with a predefined set of compression parameters. The processing system 1230 is, itself, an embodiment of the invention, and may be configured to carry out the method 100 described above with reference to Figs. 1 and 2.

The bitstream 1215 is, itself, an embodiment of the invention. The bitstream comprises a plurality of encoded signals. The bitstream may further comprise encoded metadata including a value for each of one or more mapping parameters of a plurality of mapping functions used to generate the plurality of encoded signals from an input signal having a higher bit depth than the encoded signals. Alternatively, the value for each of one or more mapping parameters may be provided to a decoder receiving the bitstream by external means.

In other words, the plurality of encoded signals are signals that have been generated by processing an input signal having a higher bit depth using a plurality of mapping functions (e.g. the mapping functions described above), and then encoding the outputs of the plurality of mapping functions. The value(s) of the mapping parameter(s) of the plurality of mapping functions are provided in the encoded metadata or by external means, to enable a signal approximating the input signal to be reconstructed from the encoded signals.

The plurality of encoded signals may, for example, be a plurality of encoded signals generated from a depth map. However, the bitstream 1215 may comprise a plurality of encoded signals generated from any higher bit-depth signal, such as an ultrasound signal.

In some examples, the bitstream 1215 may further comprise one or more further encoded signals, which have not been generated by processing the input signal using a mapping function. The one or more further encoded signals may be combined with the plurality of encoded signals in the bitstream (e.g. the plurality of encoded signals and the one or more further encoded signals may be multiplexed).

For instance, in some examples, the bitstream 1215 may be an immersive video bitstream, comprising one or more texture signals and a plurality of encoded signals generated from a depth map having a higher bit depth. Texture data and depth data sampled at a same timestamp may be combined/multiplexed in the bitstream. Texture data may be included as one or more texture patches, and the outputs of the mapping functions used to process the depth data may be included as depth patches in one or more encoded atlases in the bitstream.

In some examples, the encoded metadata may further include an indication of the plurality of mapping functions used to generate the encoded signals. Alternatively, the plurality of mapping functions may be provided to a decoder receiving the bitstream 1215 by external means; for instance, the plurality of mapping functions used may be a predefined default for the encoder used to encode the bitstream and the decoder used to decode the bitstream.

In some examples, the value(s) of the mapping parameter(s) of the plurality of mapping functions may have been determined in a way that takes into account one or more predefined error correction algorithms (e.g. by determining the measure of difference between the input signal and the reconstructed signal after applying the one or more predefined error correction algorithms to the reconstructed signal, as described above). In these examples, the encoded metadata may further include information defining or identifying the one or more predefined error correction algorithms; alternatively, the one or more predefined error correction algorithms may be provided to a decoder receiving the bitstream 1215 by external means.

In some examples, the encoded metadata may further include a threshold value for identifying uncertain data values in the encoded signals. This may particularly be the case if the threshold value for identifying uncertain data values has been determined based on set of compression parameters to encode the bitstream 1215 and/or based on one or more error correction algorithms to be used by a decoder receiving the bitstream. Alternatively, a threshold value for identifying uncertain data values in the encoded signals may be provided to a decoder receiving the bitstream by external means (e.g. a default threshold value may be used).

A threshold value for identifying uncertain data values in the encoded signals may be used in situations where it is known that some values in the input signal used to generate the plurality of encoded signals are uncertain/invalid. For instance, where the plurality of encoded signals are generated from a depth signal, the depth signal may have been acquired from a depth sensor (e.g. the Azure Kinect) that is able to identify pixels with invalid depth values (e.g. due to the presence of a metal object that reflects light from the infrared light source of the depth sensor away from the depth sensor).

In order to preserve knowledge of which values in the input signal are invalid, the input signal may be pre-scaled and pre-shifted before processing with the plurality of mapping functions, for example using Equation 10, in which z' is the pre-scaled and pre-shifted input signal for input signal z and L is the threshold value for identifying uncertain data values. In other words, each mapping function may process the pre-scaled and pre-shifted input signal z' to generate a respective output signal.

$$z' = L + z(1 - L) \qquad (10)$$

This pre-scaling and pre-shifting may provide space between uncertain/invalid values (which may be given a value of 0 in the input signal z) and valid values, reducing a likelihood that invalid values are incorrectly identified as valid and/or that valid values are incorrectly identified as invalid.

The threshold value L may be determined based on the predefined set of compression parameters. For instance, the threshold value L may be set to be a slightly larger value than a typical error range for the codec, to reduce a likelihood that invalid values are mis-identified as valid and vice versa. In some examples, the threshold value L may be application-specific; for instance, in applications for which it is particularly important that invalid values are not misidentified as valid in the decoded signal, the value of L may be increased.

After decoding the bitstream to generate a reconstructed signal (and optionally performing error correction) as described below, an inverse operation may be applied to the reconstructed signal. For instance, where Equation 10 is used to pre-scale and pre-shift the input signal, Equation 11 may be applied to the reconstructed signal $\tilde{z}'$, which was generated using a plurality of encoded signals generated by processing the pre-scaled and pre-shifted input signal z' using the plurality of mapping functions.

$$\tilde{z} = \frac{\tilde{z}' - L}{1 - L} \qquad (11)$$

Values for $\tilde{z}$ that are less than L12 may then be identified as uncertain data values.

As the skilled person will readily appreciate, the metadata encoded in the bitstream 1215 may additionally include other information. For instance, the encoded metadata may include an indication of which mapping function was used to generate each of the plurality of encoded signals; alternatively, this may be provided by external means.

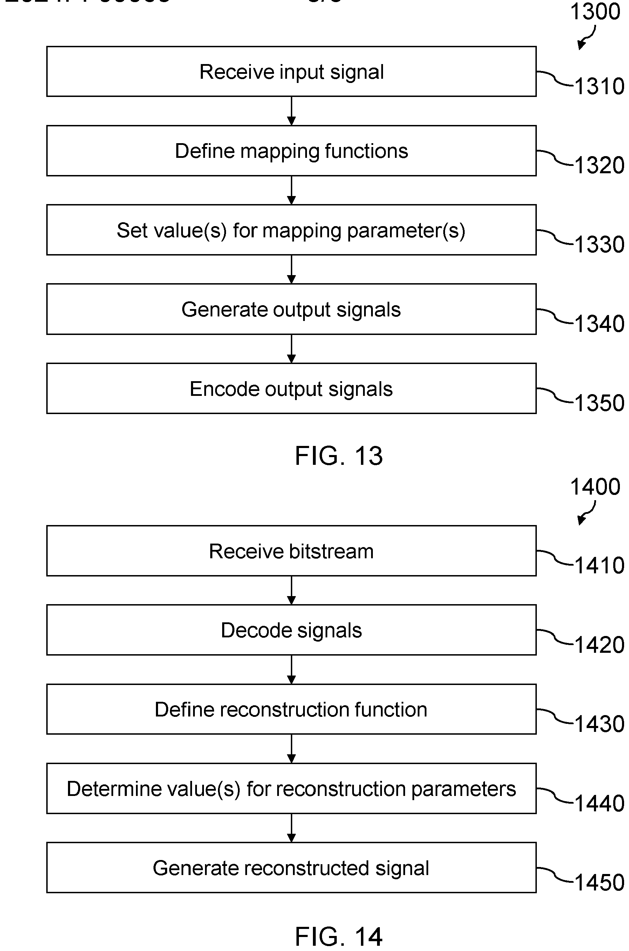

Fig. 13 illustrates a method 1300 for encoding an input signal, using an encoder configured to encode signals having a predefined bit depth using a predefined set of compression parameters, according to an embodiment of the invention. The method 1300 may be used by the encoder 1210 of Fig. 12 to generate the bitstream 1215.

The method 1300 begins at step 1310, at which an input signal having a bit depth higher than the predefined bit depth is received. The input signal may, for example, be a depth signal. For instance, the input signal may comprise a depth map or sequence of depth maps for a scene. However, as the skilled person will appreciate, the method 1300 may be used to encode any input signal having a higher bit depth than is supported by the encoder encoding the input signal.

At step 1320, a plurality of mapping functions is defined. The plurality of mapping functions are parameterized by one or more mapping parameters, and each mapping function is configured to map an input signal to an output signal having the predefined bit depth, as described above with respect to Fig. 1. For instance, the plurality of mapping functions may consist of: the mapping functions $f(z; \Delta)$ and $g(z; \Delta)$ defined by Equations 1 and 2; the mapping functions defined by Equations 3 to 6; or any other suitable plurality of mapping functions.

At step 1330, a value is set for each of the one or more mapping parameters based on the predefined compression parameters of the encoder.

The value for each of the one or more mapping parameters may be set by performing the method 100 described above with reference to Figs. 1 and 2. For instance, the encoder performing the method 1300 may set the value for each of the one or more mapping parameters by performing the method 100, or the encoder performing the method 1300 may provide the predefined set of compression parameters to a separate processing system (e.g. the processing system 1230 of Fig. 12), which may determine the value for each of the one or more mapping parameters by performing the method 100, and provide the value(s) to the encoder.

Alternatively, a suitable value for each of the one or more mapping parameters may have previously been determined by performing the method 100 (i.e. before the method 1300 is performed). For instance, if an encoder always uses a same set of compression parameters, the value(s) for the mapping parameters may be determined once, and used each time the encoder encodes an input signal having a bit depth higher than the predefined bit depth. In another example, the method 100 may have been performed multiple times for different sets of compression parameters to generate a look-up table; the step of setting the value for each of the one or more mapping parameters may then comprise selecting the value(s) corresponding to the predefined set of compression parameters in the look-up table.

If the determination of the value(s) of the mapping parameter(s) is based on a different input signal to the input signal received at step 1310 (e.g. where the value(s) are determined prior to carrying out the method 1300) and the input signal received at step 1310 is not normalized, the value(s) of the mapping parameter(s) may be scaled to the range of values of the input signal received at step 1310.

At step 1340, the input signal is processed using the plurality of mapping functions (i.e. with the value(s) for the mapping parameter(s) set in step 1330) to generate a plurality of output signals. Each output signal is generated by processing the received input signal using a respective mapping function.

At step 1350, the output signals are encoded into a bitstream. The output signals are encoded by compressing the output signals using the predefined compression parameters. The value for each of the one or more mapping parameters may be encoded as metadata in the bitstream. Alternatively, the value for each of the one or more mapping parameters may be provided to a decoder receiving the bitstream by external means (e.g. as a system level setting, or as a session setting for real-time video communications).

The output signals and the value for each of the one or more mapping parameters may be encoded using any suitable codec (including lossy codecs). For instance, if a traditional 2D video compression algorithm is used, the output signals may be placed in all color channels, or different output signals may be placed separately in the R, G, or B channels (or Y, U or V channels, as appropriate). Placing each output signal in all R, G, B channels may improve a robustness of a RGB to YUV conversion.

In some examples, the output signals may be encoded into one or more signal sub-bitstreams, and the metadata may be encoded into a metadata bitstream; the sub-bitstreams may then be multiplexed to form the bitstream.

The plurality of output signals may be preprocessed before the plurality of output signals are encoded into the bitstream. For instance, the plurality of signals may be quantized, as described above.

In some examples, the method 1300 may further comprise receiving one or more further signals (i.e. that have the predefined bit depth and that do not therefore need to be processed using the mapping functions). The step 1350 may then additionally comprise encoding the one or more further signals into the bitstream. In some examples, the one or more further signals may be multiplexed or otherwise combined with the output signals of the plurality of mapping functions when encoding the output signals and the one or more further signals into the bitstream.

For instance, when the method 1300 is used in immersive video applications, one or more video signals (i.e. containing texture data for an object or scene) having the predefined bit depth and one or more depth signals (i.e. containing depth data for the object or scene) having a higher bit depth may be received. Each depth signal may be processed using the plurality of mapping functions to generate a plurality of output signals, as described above, and the one or more video signals and the plurality of output signals may be encoded into the bitstream.

In some examples, additional metadata may be encoded in the bitstream. For instance, the metadata encoded in the bitstream may additionally include one or more of: an indication of the plurality of mapping functions used to generate the plurality of output signals; information defining or identifying one or more predefined error correction algorithms to be applied to the reconstructed signal; and/or a threshold value for identifying uncertain data values in the plurality of encoded signals. The metadata encoded in the bitstream may further include any metadata necessary for a particular application (e.g. in the case of an immersive video bitstream, the metadata may include information defining the position and/or orientation of each of the cameras used to obtain video data of the scene).

Fig. 14 illustrates a method 1400 for decoding a bitstream, according to an embodiment of the invention. The method 1400 may be used by the decoder 1220 of Fig. 12 to decode the bitstream 1215.

At step 1410, a bitstream (such as the bitstream 1215 of Fig. 12) is received. The bitstream comprises a plurality of encoded signals that have been generated from a signal having a higher bit depth. In some examples, the bitstream may further comprise encoded metadata including a value for each of one or more mapping parameters of a plurality of mapping functions used to generate the plurality of encoded signals from the input signal having a higher bit depth than the encoded signals.

At step 1420, the plurality of signals and, where relevant, the metadata are decoded. The plurality of signals (and, if present, the metadata) may be decoded using any suitable codec.

At step 1430, a reconstruction function, parameterized by one or more reconstruction parameters, is defined. The reconstruction function may be defined based on the plurality of mapping functions used to generate the plurality of encoded signals in the received bitstream, as described above (see, for example, Equations 8 and 9). Information identifying the plurality of mapping functions (and thus enabling the reconstruction function to be defined) may be included in the metadata in the received bitstream, or may be provided by external means.

At step 1440, a value is determined for each of the one or more reconstruction parameters. The value for each of the one or more reconstruction parameters may be determined based on the value for each of the one or more mapping parameters. The determination of the value for each of the one or more reconstruction parameters may depend on how the reconstruction function is defined. For instance, the reconstruction function may be defined in terms of the same parameter(s) as the plurality of mapping functions (as is the case in Equations 8 and 9 above); the determination of the value for each of the one or more reconstruction parameters may then comprise setting the value of the corresponding mapping parameter in the metadata as the value of the reconstruction parameter. If the received bitstream does not comprise metadata including a value for each of the one or more mapping parameters, the value for each of the one or more mapping parameters may be provided by external means.

At step 1450, the plurality of signals are processed using the reconstruction function to generate a reconstructed signal having the higher bit depth. The plurality of signals may be preprocessed (e.g. to de-quantize the signals) before processing the plurality of signals using the reconstruction function.

In some examples, the method 1400 may further comprise a step (not shown in Fig. 14) of identifying invalid data values. The step of identifying invalid data values may comprise processing the reconstructed signal to determine, for each data value in the reconstructed signal, a difference between the data value and each adjacent data value. Each data value for which the difference between the data value and each adjacent data value exceeds a predetermined validity threshold may then be identified as an invalid data value.

The value of the predetermined validity threshold may depend on the input signal used to generate the plurality of signals from which the reconstructed signal is generated. For instance, in the case of a depth signal containing 16-bit depth values in millimeters, a suitable predetermined validity threshold may have a value of 2-10 mm, e.g. 4 mm. The value of the predetermined validity threshold may additionally or alternatively depend on an amount of compression/decompression noise.

In some examples, the invalid data values may simply be flagged as invalid. For instance, in the case of a reconstructed depth signal, invalid data values may be replaced with a value that indicates an invalid data value (e.g. a value of zero). This may be preferred in some applications, in which the accuracy of a signal is more important than the completeness of a signal, as remaining values will have a high probability of accuracy.

In other examples, an error correction algorithm may be applied to values identified as invalid (i.e. to values identified as invalid on decoding the bitstream due to having a value lower than the threshold L12 and/or to values identified as invalid by comparison with adjacent data values). The error correction algorithm may be defined based on the plurality of mapping functions used to generate the plurality of encoded signals, as described above. For instance, where the plurality of mapping functions consisted of a division function and one or more functions processing the remainder of the division, the error correction algorithm may adjust the value of a part of the reconstruction function relating to the signal output by the division function.

One or more other error correction algorithms (e.g. any other error correction algorithm described above) may additionally or alternatively be applied to the reconstructed signal. In some examples, one or more error correction algorithms to be applied to the reconstructed signal may be defined in the metadata of the received bitstream.

As described above, in some examples, the bitstream may further comprise one or more further encoded signals. In these examples, the method 1400 may further comprise processing the reconstructed signal and the one or more further encoded signals as appropriate. For instance, in the case of an immersive video bitstream, the reconstructed signal may be a reconstructed depth signal; the method 1400 may then comprise processing the reconstructed depth signal and one or more video signals to generate an image at a target viewpoint.

Any method described herein may be computer-implemented, where computer-implemented means that the steps of said methods are performed by one or more computers and where a computer is defined as a device suitable for processing data. A computer may be suitable for processing data according to prescribed instructions.

It will be understood that, as the disclosed methods may be computer-implemented methods, there is also proposed a concept of a computer program product comprising code means for implementing any described method when said program is run on a processing system.

The skilled person would be readily capable of developing a processor for carrying out any herein described method. Thus, each step of a flow chart may represent a different action performed by a processor and may be performed by a respective module of the processing processor.

One or more steps of any of the methods described herein may be performed by one or more processors. A processor comprises an electronic circuit suitable for processing data.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

A single processor or other unit may fulfill the functions of several items recited in the claims.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

**Claims**

1. A bitstream (1215) comprising:

   a plurality of encoded signals; and
   encoded metadata, wherein the encoded metadata includes a value for each of one or more mapping parameters of a plurality of mapping functions used to generate the plurality of encoded signals from an input signal having a higher bit depth than the encoded signals.

2. The bitstream (1215) of claim 1, wherein the encoded metadata further includes an indication of the plurality of mapping functions used to generate the encoded signals.

3. The bitstream (1215) of claim 1 or 2, wherein the encoded metadata further includes a threshold value for identifying uncertain and/or missing data values in the encoded signals.

4. A method (100) for determining a value for one or more mapping parameters of a plurality of mapping functions for use with a predefined set of compression parameters, the method comprising:

   defining a plurality of mapping functions parameterized by one or more mapping parameters, wherein each mapping function is configured to map an input signal to an output signal having a predefined bit depth;
   defining an initial value for each of the one or more mapping parameters;
   receiving the predefined set of compression parameters;
   receiving an input signal (300) having a higher bit depth than the predefined bit depth;
   iteratively repeating the steps of:

   processing the input signal to generate a plurality of output signals (400, 500), wherein each output signal is generated by processing the input signal using a respective mapping function;
   compressing the plurality of output signals using the predefined set of compression parameters;
   processing the compressed output signals to generate a reconstructed signal (800, 1000) having the same bit depth as the input signal;
   determining a measure of difference (900, 1100) between the input signal and the reconstructed signal; and
   adjusting the value for each of the one or more mapping parameters based on the determined measure of difference,

   until one or more predetermined conditions are satisfied; and
   determining the value for each of the one or more mapping parameters as the value for which the one or more predetermined conditions are satisfied.

5. The method (100) of claim 4, wherein the measure of difference (900, 1100) between the input signal (300) and the reconstructed signal (800, 1000) is determined after applying one or more predefined error correction algorithms to the reconstructed signal.

6. The method (100) of claim 4 or 5, wherein the plurality of mapping functions consists of:

   a first mapping function that divides an input by a first parameter; and
   a second mapping function that determines a remainder of a division of the input by the first parameter.

7. The method (100) of claim 4 or 5, wherein the plurality of mapping functions consists of:

   a third mapping function that divides an input by a second parameter;
   a fourth mapping function that divides a first remainder by a third parameter, wherein the first remainder is a remainder of a division of the input by the second parameter; and
   a fifth mapping function that determines a remainder of a division of the first remainder by the third parameter.

8. A method (1300) for encoding an input signal using an encoder configured to encode signals having a predefined bit depth using a predefined set of compression parameters, the method comprising:

receiving an input signal (300) having a bit depth higher than the predefined bit depth;
defining a plurality of mapping functions parameterized by one or more mapping parameters, wherein each mapping function is configured to map an input signal to an output signal having the predefined bit depth;
setting a value for each of the one or more mapping parameters based on the predefined set of compression parameters;
processing the received input signal to generate a plurality of output signals (400, 500), wherein each output signal is generated by processing the received input signal using a respective mapping function; and
encoding the output signals into a bitstream (1215), wherein encoding the output signals includes compressing the output signals using the predefined set of compression parameters.

9. A method (1400) for decoding a bitstream, the method comprising:

receiving a bitstream (1215) comprising a plurality of encoded signals generated from an input signal having a higher bit depth using a plurality of mapping functions;
decoding the plurality of signals;
defining a reconstruction function parameterized by one or more reconstruction parameters;
determining a value for each of the one or more reconstruction parameters; and
processing the plurality of signals (600, 700), using the reconstruction function, to generate a reconstructed signal (800, 1000) having the higher bit depth.

10. The method (1400) of claim 9, further comprising:

processing the reconstructed signal (800, 1000) to determine, for each data value in the reconstructed signal, a difference between the data value and each adjacent data value; and
identifying, as an invalid data value, each data value for which the difference between the data value and each adjacent data value exceeds a predetermined validity threshold.

11. The method (1400) of claim 10, further comprising processing any data value identified as an invalid data value using one or more error correction algorithms to generate a corrected reconstructed signal, wherein the one or more error correction algorithms comprise at least one error correction algorithm defined based on the plurality of mapping functions used to generate the plurality of encoded signals.

12. A computer program product comprising computer program code means which, when executed on a computing device having a processing system, cause the processing system to perform all of the steps of the method (100, 1300, 1400) according to any of claims 4 to 11.

13. A processing system (1230) for determining a value for one or more mapping parameters of a plurality of mapping functions for use with a predefined set of compression parameters, the processing system being configured to:

define a plurality of mapping functions parameterized by one or more mapping parameters, wherein each mapping function is configured to map an input signal to an output signal having a predefined bit depth;
define an initial value for each of the one or more mapping parameters;
receive the predefined set of compression parameters;
receive an input signal (300) having a higher bit depth than the predefined bit depth;
iteratively repeat the steps of:

processing the input signal to generate a plurality of output signals (400, 500), wherein each output signal is generated by processing the signal using a respective mapping function;
compressing the plurality of output signals using the predefined set of compression parameters;
processing the compressed output signals to generate a reconstructed signal (800, 1000) having the same bit depth as the input signal;
determining a measure of difference (900, 1100) between the input signal and the reconstructed signal; and
adjusting the value for each of the one or more mapping parameters based on the determined measure of difference,

until one or more predetermined conditions are satisfied; and

determine the value for each of the one or more mapping parameters as the value for which the one or more predetermined conditions are satisfied.

14. An encoder (1210) configured to encode an input signal having a predefined bit depth using a predefined set of compression parameters, the encoder being further configured to:

receive an input signal (300) having a bit depth higher than the predefined bit depth;
define a plurality of mapping functions parameterized by one or more mapping parameters, wherein each mapping function is configured to map an input signal to an output signal having the predefined bit depth;
set a value for each of the one or more mapping parameters based on the predefined compression parameters;
process the received input signal to generate a plurality of output signals (400, 500), wherein each output signal is generated by processing the received input signal using a respective mapping function; and
encode the output signals into a bitstream (1215), wherein encoding the output signals includes compressing the output signals using the predefined compression parameters.

15. A decoder (1220) configured to decode data, the decoder being configured to:

receive a bitstream (1215) comprising a plurality of encoded signals generated from an input signal having a higher bit depth using a plurality of mapping functions;
decode the plurality of signals;
define a reconstruction function parameterized by one or more reconstruction parameters;
determine a value for each of the one or more reconstruction parameters; and
process the plurality of signals (600, 700), using the reconstruction function, to generate a reconstructed signal (800, 1000) having the higher bit depth.

100

Define mapping functions ~110

Define initial value(s)
of mapping parameter(s) ~120

Receive compression parameters ~130

Receive input signal ~140

Iteratively adjust value(s)
for mapping parameters ~150

FIG. 1

150

```
┌─────────────────────────────────┐
│     Generate output signals     │────151
└─────────────────────────────────┘
              │
              ▼
┌─────────────────────────────────┐
│     Compress output signals     │────152
└─────────────────────────────────┘
              │
              ▼
┌─────────────────────────────────┐
│    Generate reconstructed signal │────153
└─────────────────────────────────┘
              │
              ▼
┌─────────────────────────────────┐
│   Determine measure of difference │────154
└─────────────────────────────────┘
              │
              ▼
         Predetermined
         condition(s) met?
     N                        Y
     │                        │
     ▼                        ▼
┌──────────────┐     ┌──────────────┐
│ Adjust value(s) of │     │ Determine value(s) │
│   mapping    │     │  for mapping  │────156
│ parameter(s) │     │ parameter(s) │
└──────────────┘     └──────────────┘
       155
```

FIG. 2

EP 4 629 629 A1

FIG. 3

FIG. 4

19

FIG. 5

FIG. 6

FIG. 7

FIG. 8

FIG. 9

FIG. 10

FIG. 11

FIG. 12

1300

| Receive input signal | ~1310 |

↓

| Define mapping functions | ~1320 |

↓

| Set value(s) for mapping parameter(s) | ~1330 |

↓

| Generate output signals | ~1340 |

↓

| Encode output signals | ~1350 |

## FIG. 13

1400

| Receive bitstream | ~1410 |

↓

| Decode signals | ~1420 |

↓

| Define reconstruction function | ~1430 |

↓

| Determine value(s) for reconstruction parameters | ~1440 |

↓

| Generate reconstructed signal | ~1450 |

## FIG. 14

Europäisches
Patentamt

European
Patent Office

Office européen
des brevets

# EUROPEAN SEARCH REPORT

**Application Number**

EP 24 16 8529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MIR JUNAID ET AL: "Adaptive residual mapping for an efficient extension layer coding in two-layer HDR video coding", 2016 IEEE INTERNATIONAL CONFERENCE ON IMAGE PROCESSING (ICIP), IEEE, 25 September 2016 (2016-09-25), pages 1394-1398, XP033016751, DOI: 10.1109/ICIP.2016.7532587 [retrieved on 2016-08-03] * the whole document * | 1-15 | INV. H04N19/124 H04N19/154 H04N19/184 H04N19/36 H04N19/463 |
| X | US 2022/408096 A1 (TOURAPIS ALEXANDROS [US] ET AL) 22 December 2022 (2022-12-22) * page 1 - page 16 * | 1,4,8,9, 12-15 | |
| X | US 2024/095893 A1 (SU GUAN-MING [US] ET AL) 21 March 2024 (2024-03-21) * page 1 - page 27 * | 1,4,8,9, 12-15 | |

**TECHNICAL FIELDS SEARCHED (IPC)**

H04N

The present search report has been drawn up for all claims

| Place of search | Date of completion of the search | Examiner |
|---|---|---|
| Munich | 3 September 2024 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 16 8529

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2024

| Patent document cited in search report | | Publication date | Patent family member(s) | | Publication date |
|---|---|---|---|---|---|
| US 2022408096 | A1 | 22-12-2022 | AU | 2015223123 A1 | 15-09-2016 |
| | | | AU | 2018208733 A1 | 16-08-2018 |
| | | | AU | 2020201023 A1 | 05-03-2020 |
| | | | AU | 2021204255 A1 | 22-07-2021 |
| | | | AU | 2023200732 A1 | 09-03-2023 |
| | | | CN | 106030503 A | 12-10-2016 |
| | | | CN | 106031172 A | 12-10-2016 |
| | | | CN | 106233706 A | 14-12-2016 |
| | | | CN | 110365974 A | 22-10-2019 |
| | | | CN | 111246050 A | 05-06-2020 |
| | | | CN | 111526350 A | 11-08-2020 |
| | | | CN | 116320394 A | 23-06-2023 |
| | | | DE | 112015000950 T5 | 08-12-2016 |
| | | | DE | 112015000959 T5 | 17-11-2016 |
| | | | EP | 3111644 A1 | 04-01-2017 |
| | | | EP | 3829171 A1 | 02-06-2021 |
| | | | JP | 6383425 B2 | 29-08-2018 |
| | | | JP | 7038021 B2 | 17-03-2022 |
| | | | JP | 7429676 B2 | 08-02-2024 |
| | | | JP | 2017513257 A | 25-05-2017 |
| | | | JP | 2018207512 A | 27-12-2018 |
| | | | JP | 2021010171 A | 28-01-2021 |
| | | | JP | 2022009011 A | 14-01-2022 |
| | | | JP | 2024009972 A | 23-01-2024 |
| | | | KR | 20160110985 A | 23-09-2016 |
| | | | KR | 20180102222 A | 14-09-2018 |
| | | | KR | 20190109579 A | 25-09-2019 |
| | | | KR | 20200118237 A | 14-10-2020 |
| | | | KR | 20210143940 A | 29-11-2021 |
| | | | KR | 20220106177 A | 28-07-2022 |
| | | | KR | 20230041827 A | 24-03-2023 |
| | | | US | 2015243200 A1 | 27-08-2015 |
| | | | US | 2015243243 A1 | 27-08-2015 |
| | | | US | 2015245043 A1 | 27-08-2015 |
| | | | US | 2015245044 A1 | 27-08-2015 |
| | | | US | 2015245050 A1 | 27-08-2015 |
| | | | US | 2019182487 A1 | 13-06-2019 |
| | | | US | 2021037246 A1 | 04-02-2021 |
| | | | US | 2021227226 A1 | 22-07-2021 |
| | | | US | 2021235093 A1 | 29-07-2021 |
| | | | US | 2022408096 A1 | 22-12-2022 |
| | | | WO | 2015130793 A1 | 03-09-2015 |
| | | | WO | 2015130796 A1 | 03-09-2015 |
| | | | WO | 2015130797 A1 | 03-09-2015 |
| US 2024095893 | A1 | 21-03-2024 | EP | 4285590 A1 | 06-12-2023 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 24 16 8529

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2024

| Patent document cited in search report | Publication date | Patent family member(s) | | Publication date |
|---|---|---|---|---|
| | | JP | 2024505493 A | 06-02-2024 |
| | | US | 2024095893 A1 | 21-03-2024 |
| | | WO | 2022164929 A1 | 04-08-2022 |

EPO FORM P0459

For more details about this annex : see Official Journal of the European Patent Office, No. 12/82

page 2 of 2